# EUROPÄISCHE PATENTSCHRIFT

(11) **EP 2 601 045 B1**
(45) Veröffentlichungstag und Bekanntmachung des Hinweises auf die Patenterteilung: **06.06.2018**
(21) Anmeldenummer: 11740653.8
(22) Anmeldetag: 04.08.2011
(51) Int. Cl.: B65D 83/62, B32B 15/20, B32B 27/32, B32B 27/36, B32B 27/40, B32B 7/12, B32B 15/08, B32B 27/08

(54) **BAG-ON-VALVE-SYSTEM UND FOLIENLAMINAT FÜR AGGRESSIVE FÜLLGÜTER**
BAG-ON-VALVE SYSTEM AND FILM LAMINATE FOR AGGRESSIVE FILLING MATERIALS
SYSTÈME VALVE À POCHE ET STRATIFIÉ DE FEUILLES POUR PRODUITS DE REMPLISSAGE AGRESSIFS

(30) Priorität: 04.08.2010 DE 102010038912
(43) Veröffentlichungstag der Anmeldung: 12.06.2013
(73) Patentinhaber: Huhtamaki Flexible Packaging Germany GmbH & Co. KG, 87671 Ronsberg/Allgäu (DE)
(72) Erfinder: PFEIFFENBERGER, Alwin, 87448 Waltenhofen (DE)
(74) Vertreter: RLTG
(86) Internationale Anmeldenummer: PCT/EP2011/063473
(87) Internationale Veröffentlichungsnummer: WO 2012/017047

(56) Entgegenhaltungen:
- EP-A1- 0 376 614
- DE-A1- 10 042 334
- US-A1- 2005 098 457
- US-A1- 2009 108 021
- US-A1- 2010 268 187

## Beschreibung

Die vorliegende Erfindung betrifft ein Bag-on-Valve-System, umfassend einen Druckbehälter mit einem darin aufgenommenen, im Wesentlichen flexiblen Füllgut-Behälter, in welchem ein Füllgut mit ungesättigten Verbindungen, vorzugsweise Terpenen, besonders bevorzugt Limonenen, aufgenommen ist, das über ein wahlweise betätigbares Ventil aus dem Bag-on-Valve-System entnehmbar ist, wobei zur Unterstützung der Entnahme in dem Druckbehälter, jedoch außerhalb des Füllgut-Behälters, ein Treibmittel, vorzugsweise ein Treibgas, vorgesehen ist, so dass eine flexible Hülle des Füllgut-Behälters auf ihrer Innenseite in Kontakt mit dem Füllgut und auf ihrer Außenseite in Kontakt mit dem Treibmittel steht, wobei ferner die Hülle des Füllgut-Behälters im Wesentlichen aus einem flexiblen Folienlaminat gebildet ist, welches in Richtung von der Außenseite zur Innenseite eine Metalllage, eine Kunststofflage und eine thermisch siegelfähige Siegellage in der genannten Reihenfolge aufweist.

Ein gattungsgemäßes Bag-on-Valve-System mit einem Druckbehälter und einem darin aufgenommenen Füllgut-Behälter ist aus der US 2009/108021 A1 bekannt. Diese Druckschrift offenbart genauer einen Füllgut-Behälter mit einer sieben-lagigen flexiblen Hülle, welche von außen nach innen eine PET-Lage, eine Haftvermittlerlage, eine Aluminiumlage, eine Haftvermittlerlage, eine Lage orientierten Polyamid, eine Haftvermittlerlage und eine Polypropylen-Lage aufweist.

Derartige Bag-on-Valve-Systeme werden beispielsweise als Verpackung von Kosmetik- und Hygieneartikeln verwendet, wie etwa Rasiergel. Bag-on-Valve-Systeme als Verpackung sind von Vorteil, weil sie die Möglichkeit bieten, ein Treibmittel zur Unterstützung der Entleerung der Verpackung räumlich getrennt vom Füllgut bereitzustellen, so dass es keinerlei Wechselwirkungen zwischen Füllgut und Treibmitteln geben kann, die entweder nachteilig für die Qualität des Füllguts oder/und für die Wirksamkeit des Treibmittels sein können.

Ein besonderes Problem besteht bei Verpackungen vom Typ der Bag-on-Valve-Systeme jedoch darin, dass die flexible Hülle des Füllgut-Behälters zu beiden Seiten, also mit ihrer Innenseite ebenso wie mit ihrer Außenseite, in Kontakt mit aggressiven Medien stehen kann. An der Außenseite besteht ein Kontakt der Hülle des Füllgut-Behälters mit dem Treibmittel. Dieser ist in der Regel weniger kritisch, da Bag-on-Valve-Systeme die Verwendung von Luft oder von inerten oder quasi-inerten Gasen, wie etwa Stickstoff, als Treibgas ermöglichen.

An der Innenseite steht die Hülle in Kontakt mit dem Füllgut. Dabei hängt es sehr stark von der Natur des Füllguts ab, welche Maßnahmen an der Hülle getroffen werden müssen, um eine zeitlich beständige Aufnahme des Füllguts im Füllgut-Behälter gewährleisten zu können.

Als aggressive Füllgüter haben sich besonders limonenehaltige Füllgüter erwiesen, deren chemische Aggressivität auf dem Vorhandensein ungesättigter Verbindungen beruht. Deshalb werden nachfolgend allgemein Füllgüter mit ungesättigten Verbindungen als chemisch ausreichend aggressiv angesehen, dass besondere Maßnahmen an der Hülle getroffen werden müssen, um ihre Integrität über die erwartete Gebrauchsdauer sicherstellen zu können.

Innerhalb der Füllgüter mit ungesättigten Verbindungen bilden Füllgüter mit zyklisch ungesättigten Verbindungen eine Untergruppe mit erhöhter chemicher Aggressivität. Innerhalb dieser Gruppe zeigen wiederum Terpene eine noch höhere chemische Aggressivität. Innerhalb der Terpene nehmen schließlich die Limonene aufgrund ihrer noch weiter erhöhten chemischen Aggressivität eine Sonderstellung ein.

Die Hülle des Füllgut-Behälters ist aus einem flexiblen Material, in der Regel einer flexiblen Folie, gefertigt, um das Volumen des Füllgut-Behälters bei der Entleerung des Bag-on-Valve-Systems durch das von außen einwirkende Treibmittel verringern und somit ein in der Regel inkompressibles oder quasiinkompressibles Füllgut bei entsprechender Ventilbetätigung entnehmen zu können.

Herkömmliche Bag-on-Valve-Systeme verwenden als Material für die flexible Hülle des Füllgut-Behälters ein flexibles Folienlaminat, welches eine Aluminium-Lage, eine Lage aus orientiertem Polyamid und eine thermisch siegelfähige Lage in der Richtung von der Außenseite zur Innenseite hin umfassen. Es hat sich allerdings gezeigt, dass diese Folienlaminate dann, wenn sie mit den oben genannten aggressiven Füllgütern in Kontakt gelangen, mitunter zur Delamination neigen oder/und die Aluminiumlage durch die aggressiven Füllgüter, insbesondere durch limonenehaltige Füllgüter, korrodiert wird.

So kann es vorkommen, dass Füllgut-Behälter und damit das gesamte Bag-on-Valve-System bereits kurze Zeit nach Befüllung mit Füllgütern mit ungesättigten Verbindungen, insbesondere mit limonenehaltigen Füllgütern durch diese in ihrer strukturellen Integrität so weit angegriffen sind, dass es zu einem Versagen des Verpackungssystems kommt. Dabei kann die Standfestigkeit des Bag-on-Valve-Systems unerwünschterweise deutlich unter der erwarteten oder benötigten Gebrauchsdauer liegen.

Aus der EP 0 376 614 A1 ist ein Folienbehälter für Zitrusfruchtsaft bekannt, welcher zur besseren Beständigkeit gegen d-limonene Polybutylenterephthalat aufweist.

Aus der US 2005/0098457 A1 ist eine Verpackung zur Aufnahme von elektronischen Bauteilen bekannt. Die Verpackung weist einen Verpackungskörper mit einem durchsichtigen Fenster auf, welches aus einem flexiblen laminierten Lagenmaterial gebildet ist.

Aus der DE 100 42 334 A1 ist eine Verbundfolie aus einer weißen Polyesterfolie bekannt, die Cycloolefincopolymer enthält. Die Folie soll bei geringen Herstellkosten herstellbar sein und einen hohen Glanz aufweisen. Die Polyesterfolie kann mit einer Polyolefinfolie, mit Papier, Aluminium, einer Polyamidfolie oder einer weiteren Polyesterfolie zu einer Verbundfolie verbunden sein.

Es ist daher Aufgabe der vorliegenen Erfindung, eine technische Lehre anzugeben, welche es ermöglicht, die Standzeit von Bag-on-Valve-Systemen für die oben genannten kritischen Füllgüter zu erhöhen, so dass es grundsätzlich möglich wird, auch die oben genannten kritischen Füllgüter mit ungesättigten Verbindungen in Bag-on-Valve-Systemen zu verpacken und anzubieten.

Diese Aufgabe wird erfindungsgemäß gelöst durch ein Bag-on-Valve-System der eingangs genannten Art, bei welchem die Kunststofflage eine Polyesterlage ist. Es hat sich dabei überraschend herausgestellt, dass Polyester Bestandteile von Füllgütern mit ungesättigten Verbindungen dauerhaft zurückzuhalten vermag und so die Metalllage vor einem Kontakt mit aggressiven Füllgütern oder deren Bestandteilen zu schützen.

Innerhalb der möglichen Polyesterlagen bieten Lagen aus aromatischem Polyester einen noch höheren Schutz der Metalllage gegen die genannten aggressiven Füllgüter. Als besonders wirksam in der Abschirmung der Metalllage gegenüber den aggressiven Füllgütern haben sich Terephthalatlagen, wie etwa Polybutylenterephthalat und Polyethylenterephthalat erwiesen, von welchen besonders das Polyethylenterephthalat hervorragende Abschirmungseigenschaften gegenüber aggressiven Füllgütern mit ungesättigten Verbindungen bewiesen hat.

Als Siegellage kann, wie gewöhnlich, eine Polyolefinlage verwendet werden, wobei sich dabei Polyethylenlagen oder Polypropylenlagen als besonders zuverlässig und kostengünstig erwiesen haben.

Zur besseren Haftung der Polyesterlage und der Siegellage aneinander kann zwischen diesen eine Haftvermittlerlage vorgesehen sein. Ebenso kann zwischen der Metalllage und der Polyesterlage eine Haftvermittlerlage vorgesehen sein, wenngleich es grundsätzlich nicht ausgeschlossen sein soll, dass die Polyesterlage einseitig mit einem Metall, insbesondere Aluminium, beschichtet ist, etwa durch Bedampfen oder Sputtern.

Zum Schutz der Außenseite der Hülle, also insbesondere zum Schutz der Metalllage vor dem Treibmittel, kann vorgesehen sein, dass das flexible Folienlaminat eine weitere Polyesterlage derart aufweist, dass die Metallage zwischen der zuvor genannten Polyesterlage und der nun genannten weiteren Polyesterlage vorgesehen ist.

Wiederum kommen als Polyester mit aufsteigender Schutzwirkung aromatische Polyester, Terephthalate und besonders bevorzugt Polyethylenterephthalat als Lagenwerkstoff in Frage. In Abhängigkeit von dem tatsächlich verwendeten Treibmittel kann jedoch anstelle der Polyesterlage auch eine Lage anderen Materials auf der zum Treibmittel hinweisenden Seite der Metalllage vorgesehen sein.

Wiederum kann zwischen der Metalllage und der weiteren Polyesterlage eine Haftvermittlerlage vorgesehen sein.

Gerade bei sehr aggressiven Füllgütern, wie sie limonenehaltige Füllgüter darstellen, hat sich überraschend herausgestellt, dass die Kombination aus Polyesterlage und Haftvermittlerlage zu einer wesentlichen Erhöhung der Standzeit der aus dem beschriebenen Folienlaminat gebildeten Hülle führt.

Verwendet man beispielsweise Polyurethan als Haftvermittlerlage, kann Delamination einerseits verhindert und die Abschirmwirkung bezüglich der Metalllage andererseits erhöht werden.

Besonders wirksam hat sich dabei aromatisches Polyurethan als Haftvermittlerwerkstoff ausgezeichnet. Insbesondere die Kombination aus einer Polyethylenterephthalatlage mit einer Haftvermittlerlage aus aliphatischem oder aromatischem Polyurethan erzielte eine ebenso hervorragende Stabilität des Laminats wie eine hervorragende Abschirmung der Metalllage gegenüber dem Füllgut und seinen Bestandteilen. Auch die Verwendung von Acrylaten als Haftvermittler ist zur Erzielung einer Abschirmwirkung zusammen mit der Polyesterlage denkbar.

Grundsätzlich sind verschiedene Metalle zur Herstellung der Metallage denkbar, aus Kostengründen bei hoher Wirksamkeit ist jedoch eine Lage aus Aluminium, d. h. eine Aluminiumlegierung, bevorzugt.

Grundsätzlich soll nicht ausgeschlossen sein, dass das Folienlaminat, welches die flexible Hülle des Füllgutbehälters bildet, neben den oben genannten Lagen weitere Lagen umfasst. Notwendig ist dies jedoch nicht. So ist aus Kostengründen bevorzugt, wenn die Siegellage eine Innenfläche der Hülle bildet, welche in Kontakt mit dem Füllgut gelangt.

Ebenso kann vorgesehen sein, wenngleich dies nicht zwingend notwendig ist, dass die oben genannte weitere Polyesterlage eine Außenfläche der Hülle bildet, welche in Kontakt mit dem Treibmittel steht.

Zur Sicherstellung der Abschirmungswirkung der Polyesterlage sollte diese eine Mindestdicke von 6 µm aufweisen. Vorzugsweise liegt die Dicke in einem Bereich zwischen 8 µm und 20 µm, mit einer bevorzugten Dicke von 12 µm.

Weiterhin löst die Verwendung des oben beschriebenen Folienlaminats in Bag-on-Valve-Systemen, insbesondere zur Herstellung von Füllgut-Behältern für Bag-on-Valve-Systeme, die eingangs genannte Aufgabe. Die Verwendung betrifft ein Folienlaminat, umfassend, in der genannten Reihenfolge, eine Metall-, vorzugsweise Aluminiumlage, eine Terephthalatlage und eine zum Kontakt mit einem Füllgut bestimmte thermisch siegelfähige Lage mit wenigstens einer zwischenangeordneten Haftvermittlerlage aus, vorzugsweise aliphatischem oder aromatischem, Polyurethan oder einem Acrylat. Das Folienlaminat kann weiterhin gemäß den obigen Angaben weitergebildet sein. Zu den Vorteilen der einzelnen Weiterbildungen wird auf die obigen Ausführungen verwiesen.

Die vorliegende Erfindung wird nachfolgend anhand der beiliegenden Figuren erläutert. Es stellt dar.
- Figur 1: eine schematische Längsschnittdarstellung eines erfindungsge-mäßen Bag-on-Valve-Systems und
- Figur 2: eine Querschnittdarstellung eines für die Herstellung von Füllgut-Behältern des Bag-on-Valve-Systems von Figur 1 besonders bevorzugten Folienlaminats.

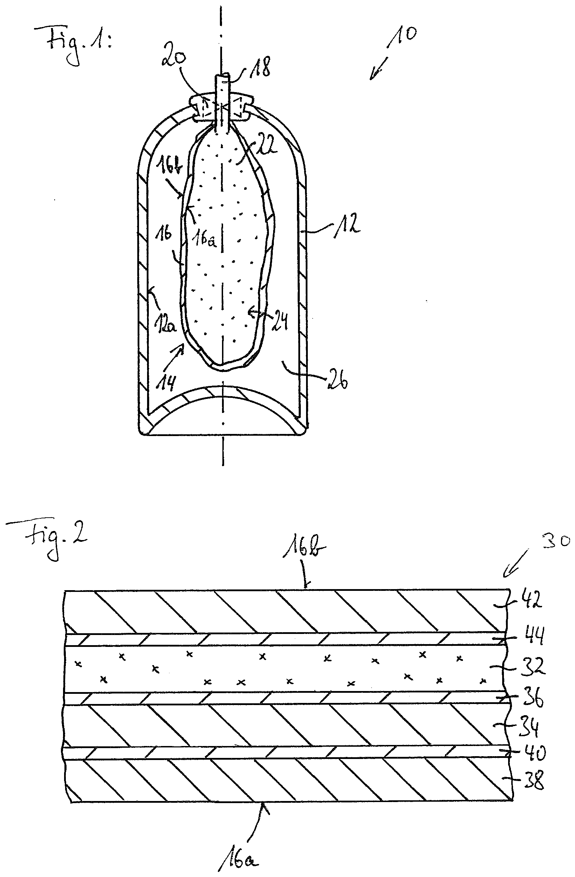

In Figur 1 ist eine erfindungsgemäße Ausführungsform eines Bag-on-Valve-Systems allgemein mit 10 bezeichnet. Das Bag-on-Valve-System 10 umfasst einen Druckbehälter 12, welcher einen Füllgut-Behälter 14 umgibt.

Der Druckbehälter 12 kann beispielsweise aus Metall oder starrem Kunststoff, oder einem Verbund mehrerer Werkstoffe gebildet sein.

Der Füllgut-Behälter 14 umfasst eine im Wesentlichen flexible Hülle 16 und einen Entnahmekanal 18, über welchen durch Betätigung eines den Entnahmekanal wahlweise, etwa durch Drückbetätigung, freigebenden oder versperrenden Ventils 20 Füllgut 22 aus dem Innenbereich 24 der Hülle 16 entnommen werden kann.

Der Druckbehälter 12 weist somit außer dem Innenbereich 24 der Hülle 16 einen Treibmittelbereich 26 auf, welcher zwischen der Hülle 16 und der Innenwand 12a des Druckbehälters 12 gelegen ist.

Als Treibmittel kann beispielsweise Druckluft oder ein anderes unter Druck stehendes, vorzugsweise inertes oder quasi-inertes, Gas verwendet werden. Dies ist besonders vorteilhaft, da inertes oder quasi-inertes Gas als Treibmittel im Gegensatz zu herkömmlichen entflammbaren Treibgasen nicht entflammbar oder wenigstens schwer entflammbar ist.

Dann, wenn das Füllgut 22 ungesättigte Verbindungen umfasst und somit eine erhöhte chemische Aggressivität aufweist, empfiehlt es sich, das in Figur 2 dargestellte Folienlaminat zur Herstellung des Füllgut-Behälters 14 zu verwenden.

Das in Figur 2 gezeigte und allgemein mit 30 bezeichnete Folienlaminat weist eine Metalllage 32 auf, welche vorzugsweise eine Aluminiumlage ist. Zur Innenseite 16a der Hülle 16 hin, welche mit dem Füllgut 22 in Kontakt steht, ist eine Polyesterlage 34 vorgesehen, welche besonders bevorzugt aus Polyethylenterephthalat-12 gebildet ist, und welche zur Erhöhung der Abschirmwirkung gegenüber der Metalllage 32 unter Zwischenanordnung einer Haftvermittlerlage 36 mit der Metalllage 32 verbunden ist. Vorzugsweise wird aromatischer Polyurethan-Kleber als Haftvermittler verwendet, da die Kombination aus Polyethylenterephthalat-12 und aromatischem Polyurethan-Kleber eine besonders hohe Laminatstabilität und besonders hohe Abschirmwirkung zum Schutze der Metalllage 32 vor dem Füllgut 22 gezeigt hat.

Weiter innen ist eine thermisch siegelfähige Siegellage 38 aus einem Polyolefin, etwa Polypropylen oder Polyethylen, vorgesehen, welche eine Siegelverbindung mit anderen Folienlaminatstücken und somit die Bildung einer geschlossenen Hülle 16 aus einem Folienlaminat 30 ermöglicht. Vorzugsweise ist aus den oben bereits genannten Gründen auch die Siegellage 38 durch eine weitere Haftvermittlerlage 40 mit der Polyesterlage 34 verbunden, wobei wiederum aromatischer Polyurethan-Kleber den bevorzugten Haftvermittlerwerkstoff darstellt.

Die Siegellage 38 kann die Innenfläche 16a der Hülle 16 bilden.

Zur Außenfläche 16b der Hülle 16 hin kann die Metalllage 32 wiederum durch eine Kunststofflage 42 vor den Einflüssen des Treibmittels im Treibmittelbereich 26 geschützt sein. Die Kunststofflage 42 ist vorzugsweise eine Polyesterlage, besonders bevorzugt Polyethylenterephthalat-12, also eine Lage mit einer Dicke von etwa 12 µm.

Aus den oben bereits erläuterten Gründen ist die Kunststofflage 42 durch eine Haftvermittlerlage 44 mit der Metalllage 32 verbunden, wobei auch diese Haftvermittlerlage bevorzugt aromatischen Polyurethan-Klebstoff als Haftvermittler-Werkstoff verwendet.

Das beschriebene Folienlaminat bleibt auch über einen langen Zeitraum, etwa von mehr als einem Jahr, selbst bei direktem Kontakt der Siegellage 38 mit limonenehaltigem Füllgut stabil und delaminiert nicht. Ebenso sind keinerlei Korrosionserscheinungen an einer Aluminiumlage 32 als der Metalllage 32 erkennbar. Damit können Bag-on-Valve-Systeme auch zur Verpackung von chemisch so aggressiven Füllgütern wie limonenehaltigen Füllgütern verwendet werden.

Die in Figur 2 gezeigten Schichtdicken geben die tatsächlichen Schichtdicken des Folienlaminats nicht maßstäblich wieder. Figur 2 ist lediglich eine grobschematische Darstellung, der im Wesentlichen nur der Schichtaufbau hinsichtlich der Materialabfolge entnommen werden sollte.

## Patentansprüche

1. Bag-on-Valve-System (10), umfassend einen Druckbehälter (12) mit einem darin aufgenommenen, im Wesentlichen flexiblen Füllgut-Behälter (14), in welchem ein Füllgut (22) mit ungesättigten Verbindungen aufgenommen ist, das über ein wahlweise betätigbares Ventil (20) aus dem Bag-on-Valve-System (10) entnehmbar ist, wobei zur Unterstützung der Entnahme in dem Druckbehälter (12), jedoch außerhalb des Füllgut-Behälters (14), ein Treibmittel vorgesehen ist, so dass eine flexible Hülle (16) des Füllgut-Behälters (14) auf ihrer Innenseite (16a) in Kontakt mit dem Füllgut (22) und auf ihrer Außenseite (16b) in Kontakt mit dem Treibmittel steht, wobei ferner die Hülle (16) des Füllgut-Behälters (14) im Wesentlichen aus einem flexiblen Folienlaminat (30) gebildet ist, welches in Richtung von der Außenseite (16b) zur Innenseite (16a) eine Metalllage (32), eine Kunststofflage (34) und eine thermisch siegelfähige Siegellage (38) in der genannten Reihenfolge aufweist,
**dadurch gekennzeichnet, dass** die Kunststofflage (34) eine Polyesterlage (34) ist.

2. Bag-on-Valve-System (10) nach Anspruch 1,
**dadurch gekennzeichnet, dass** die Siegellage (38) eine Polyolefinlage, vorzugsweise eine Polyethylen- oder eine Polypropylenlage, ist.

3. Bag-on-Valve-System (10) nach Anspruch 1 oder 2,
**dadurch gekennzeichnet, dass** zwischen der Polyesterlage (34) und der Siegellage (38) eine Haftvermittlerlage (40) vorgesehen ist.

4. Bag-on-Valve-System (10) nach einem der vorhergehenden Ansprüche,
**dadurch gekennzeichnet, dass** zwischen der Metalllage (32) und der Polyesterlage (34) eine Haftvermittlerlage (36) vorgesehen ist.

5. Bag-on-Valve-System (10) nach einem der vorhergehenden Ansprüche,
**dadurch gekennzeichnet, dass** das flexible Folienlaminat (30) eine weitere Polyesterlage (42), stärker bevorzugt eine Lage aus aromatischem Polyester, noch stärker bevorzugt eine Therephthalatlage, besonders bevorzugt eine Polyethylenterephthalatlage derart aufweist, dass die Metalllage (32) zwischen der Polyesterlage (34) und der weiteren Polyesterlage (42) vorgesehen ist.

6. Bag-on-Valve-System (10) nach Anspruch 5,
**dadurch gekennzeichnet, dass** zwischen der Metalllage (32) und der weiteren Polyesterlage (42) eine Haftvermittlerlage (44) vorgesehen ist.

7. Bag-on-Valve-System (10) nach einem der vorhergehenden Ansprüche unter Einbeziehung des Anspruchs 6 oder/und 4 oder/und 3,
**dadurch gekennzeichnet, dass** die Haftvermittlerlage (36, 40, 44) Acrylate oder Polyurethan, vorzugsweise aliphatisches oder aromatisches Polyurethan umfasst, vorzugsweise eine Lage aus aromatischem Polyurethan ist.

8. Bag-on-Valve-System (10) nach einem der vorhergehenden Ansprüche,
**dadurch gekennzeichnet, dass** die Metalllage (32) eine Aluminiumlage ist.

9. Bag-on-Valve-System (10) nach einem der vorhergehenden Ansprüche,
**dadurch gekennzeichnet, dass** die Siegellage (38) eine Innenfläche (16a) der Hülle (16) bildet.

10. Bag-on-Valve-System (10) nach einem der vorhergehenden Ansprüche, unter Einbeziehung des Anspruchs 5,
**dadurch gekennzeichnet, dass** die weitere Polyesterlage (42) eine Außenfläche (16b) der Hülle (16) bildet.

11. Verwendung eines Folienlaminats (30), umfassend, in der genannten Reihenfolge, eine Metallllage (32) eine Terephthalatlage (34) und eine zum Kontakt mit einem Füllgut bestimmte thermisch siegelfähige Lage mit wenigstens einer zwischenangeordneten Haftvermittlerlage (36) aus Polyurethan in Bag-on-Valve-Systemen (10).

12. Verwendung eines Folienlaminats (30) nach Anspruch 11,
**dadurch gekennzeichnet, dass** die Metalllage (32) eine Aluminiumlage ist

13. Verwendung eines Folienlaminats (30) nach Anspruch 11 oder 12,
**dadurch gekennzeichnet, dass** das Polyurethan ein aromatisches Polyurethan ist.

14. Verwendung eines Füllgut-Behälters (14) mit einer im Wesentlichen flexiblen Hülle (16), welche im Wesentlichen aus einem flexiblen Folienlaminat (30) gebildet ist, das in Richtung von der Außenseite (16b) zur Innenseite (16a) eine Metalllage (32), eine Polyesterlage (34) und eine thermisch siegelfähige Siegellage (38) in der genannten Reihenfolge aufweist, in einem Bag-on-Valve-System (10), umfassend einen Druckbehälter (12) mit dem darin aufgenommenen Füllgut-Behälter (14), ein wahlweise betätigbares Ventil (20) sowie ein in dem Druckbehälter (12), jedoch außerhalb des Füllgut-Behälters (14) vorgesehenes Treibmittel.

## Claims

1. Bag-on-valve system (10) comprising a pressure container (12) having a substantially flexible filling material container (14) received therein and in which a filling material (22) having unsaturated compounds is received which can be removed from the bag-on-valve system by means of a selectively actuatable valve (20), a propellant being provided in order to support the removal in the pressure container (12) but outside the filling material container (14) so that a flexible sheath (16) of the filling material container (14) is in contact with the filling material (22) at the inner side (16a) thereof and is in contact with the propellant at the outer side (16b) thereof, the sheath (16) of the filling material container (14) further being substantially formed from a flexible film laminate (30) which has a metal layer (32), a plastics layer (34) and a thermally sealable sealing layer (38) in the sequence mentioned in the direction from the outer side (16b) to the inner side (16a),
**characterized in that** the plastics layer (34) is a polyester layer.

2. Bag-on-valve system (10) according to claim 1,
**characterized in that** the sealing layer (38) is a polyolefin layer, preferably a polyethylene layer or polypropylene layer.

3. Bag-on-valve system (10) according to claim 1 or 2,
**characterized in that** a bond promoting layer (40) is provided between the polyester layer (34) and the sealing layer (38).

4. Bag-on-valve system (10) according to one of the preceding claims,
**characterized in that** a bond promoting layer (36) is provided between the metal layer (32) and the polyester layer (34).

5. Bag-on-valve system (10) according to one of the preceding claims,
**characterized in that** the flexible film laminate (30) has an additional polyester layer (42), more preferably a layer of aromatic polyester, even more preferably a terephthalate layer, particularly preferably a polyethylene terephthalate layer so that the metal layer (32) is provided between the polyester layer (34) and the additional polyester layer (42).

6. Bag-on-valve system (10) according to claim 5,
**characterized in that** a bond promoting layer (44) is provided between the metal layer (32) and the additional polyester layer (42).

7. Bag-on-valve system (10) according to one of the preceding claims including claim 6 or/and 4 or/and 3,
**characterized in that** the bond promoting layer (36, 40, 44) comprises acrylates or polyurethane, preferably aliphatic or aromatic polyurethane, and is preferably a layer of aromatic polyurethane.

8. Bag-on-valve system (10) according to one of the preceding claims,
**characterized in that** the metal layer (32) is an aluminium layer.

9. Bag-on-valve system (10) according to one of the preceding claims,
**characterized in that** the sealing layer (38) forms an inner face (16a) of the sheath (16).

10. Bag-on-valve system (10) according to one of the preceding claims including claim 5,
**characterized in that** the additional polyester layer (42) forms an outer face (16b) of the sheath (16).

11. Use of a film laminate (30) comprising a metal layer (32), a terephthalate layer (34) and a thermally sealable sealing layer for contact with the filling material in the sequence mentioned having at least one bond promoting layer (36) arranged therebetween made of polyurethane in bag-on-valve systems (10).

12. Use of a film laminate (30) according to claim 11,
**characterized in that** the metal layer (32) is an aluminium layer.

13. Use of a film laminate (30) according to claim 11 or 12,
**characterized in that** the polyurethane is an aromatic polyurethane.

14. Use of a filling material container (14) with a substantially flexible sheath (16) which is substantially made of a flexible film laminate (30) which has a metal layer (32), a plastics layer (34) and a thermally sealable sealing layer (38) in the sequence mentioned in the direction from the outer side (16b) to the inner side (16a) in a bag-on-valve system (10) comprising a pressure container (12) with the filling material container (14) received therein, a selectively actuatable valve (20) as well as a propellant provided in the pressure container (12) but outside the filling material container (14).

## Revendications

1. Système Bag-on-Valve (10) comprenant un récipient sous pression (12) avec un récipient de matériau de remplissage (14) essentiellement flexible reçu là-dedans dans lequel un matériau de remplissage (22) avec des composés insaturés est reçu qui peut être retiré du système Bag-on-Valve (10) via une soupape (20) sélectivement actionnable, un gaz propulseur étant prévu pour supporter la prise dans le récipient sous pression (12) mais à l'extérieur du récipient de matériau de remplissage (14) de sorte qu'une enveloppe flexible (16) du récipient de matériau de remplissage (14) est en contact avec le matériau de remplissage (22) à sa face intérieur (16a) et est en contact avec le gaz propulseur à sa face extérieur (16b), l'enveloppe (16) du récipient de matériau de remplissage (14) étant en outre formé essentiellement d'une feuille laminée flexible (30) qui comprend une couche métallique (32), une couche en plastique (34) et une couche d'étanchéité thermosoudable (38) dans l'ordre mentionné dans le sens de la face extérieur (16b) à la face intérieur (16a),
**caractérisé en ce que** la couche en plastique (34) est une couche de polyester (34).

2. Système Bag-on-Valve (10) selon la revendication 1,
**caractérisé en ce que** la couche d'étanchéité (38) est une couche de polyoléfine, de préférence une couche de polyéthylène ou une couche de polypropylène.

3. Système Bag-on-Valve (10) selon les revendications 1 ou 2,
**caractérisé en ce qu'**une couche de promoteur d'adhérence (40) est prévue entre la couche de polyester (34) et la couche d'étanchéité (38).

4. Système Bag-on-Valve (10) selon une des revendications précédentes,
**caractérisé en ce qu'**une couche de promoteur d'adhérence (36) est prévue entre la couche métallique (32) et la couche de polyester (34).

5. Système Bag-on-Valve (10) selon une des revendications précédentes,
**caractérisé en ce que** la feuille laminée flexible (30) comprend une couche de polyester supplémentaire (42), de manière plus préférée une couche de polyester aromatique, de manière encore plus préférée une couche de téréphtalate, de maniéré particulièrement préférée une couche de téréphtalate de polyéthylène, de sorte que la couche métallique (32) est prévue entre la couche de polyester (34) et la couche de polyester supplémentaire (42).

6. Système Bag-on-Valve (10) selon la revendication 5,
**caractérisé en ce qu'une** couche de promoteur d'adhérence (44) est prévue entre la couche métallique (32) et la couche de polyester supplémentaire (42).

7. Système Bag-on-Valve (10) selon une des revendications précédentes comprenant la revendication 6 ou/et 4 ou/et 3,
**caractérisé en ce que** la couche de promoteur d'adhérence (36, 40, 44) comprend des acrylates ou du polyuréthane, de préférence du polyuréthane aliphatique ou aromatique et est de préférence une couche de polyuréthane aromatique.

8. Système Bag-on-Valve (10) selon une des revendications précédentes,
**caractérisé en ce que** la couche métallique (32) est une couche d'aluminium.

9. Système Bag-on-Valve (10) selon une des revendications précédentes,
**caractérisé en ce que** la couche d'étanchéité (38) forme une face intérieur (16a) de l'enveloppe (16).

10. Système Bag-on-Valve (10) selon une des revendications précédentes, comprenant la revendication 5,
**caractérisé en ce que** la couche de polyester supplémentaire (42) forme une face extérieur (16b) de l'enveloppe (16).

11. Utilisation d'une feuille laminée flexible (30) comprenant une couche métallique (32), une couche de téréphtalate (34) et une couche d'étanchéité thermosoudable pour un contact avec le matériau de remplissage dans l'ordre mentionné, ayant au moins une couche de promoteur d'adhérence (36) arrangée entre elles fabriquées de polyuréthane dans des systèmes de Bag-on-Valve (10).

12. Utilisation d'une feuille laminée flexible (30) selon la revendication 11,
**caractérisé en ce que** la couche métallique (32) est une couche d'aluminium.

13. Utilisation d'une feuille laminée flexible (30) selon la revendication 11 ou 12,
**caractérisé en ce que** la polyuréthane est une polyuréthane aromatique.

14. Utilisation d'un récipient de matériau de remplissage (14) avec une enveloppe essentiellement flexible (16) qui est fabriquée essentiellement d'une feuille laminée flexible (30) qui comprend une couche métallique (32), une couche en plastique (34) et une couche d'étanchéité thermosoudable (38) dans l'ordre mentionné dans le sens de la face extérieur (16b) à la face intérieur (16a) dans un système de Bag-on-Valve (10) comprenant un récipient sous pression (12) avec le récipient de matériau de remplissage (14) reçu là-dedans, une soupape (20) sélectivement actionnable ainsi qu'un gaz propulseur prévu dans le récipient sous pression (12) mais à l'extérieur du récipient de matériau de remplissage (14).
